# EUROPÄISCHE PATENTSCHRIFT

(11) **EP 3 015 672 B1**
(45) Veröffentlichungstag und Bekanntmachung des Hinweises auf die Patenterteilung: **09.08.2017**
(21) Anmeldenummer: 15191660.8
(22) Anmeldetag: 27.10.2015
(51) Int. Cl.: F01N 3/20, F01N 3/28, F01N 13/18, B01F 5/06

(54) **ABGASBEHANDLUNGSEINRICHTUNG**
EXHAUST GAS TREATMENT DEVICE
DISPOSITIF DE TRAITEMENT DE GAZ D'ÉCHAPPEMENT

(30) Priorität: 31.10.2014 DE 102014222296
(43) Veröffentlichungstag der Anmeldung: 04.05.2016
(73) Patentinhaber: Eberspächer Exhaust Technology GmbH & Co. KG, 66539 Neunkirchen (DE)
(72) Erfinder: Palinkas, Marc, 73730 Esslingen (DE); Balle, Andreas, 73732 Esslingen (DE); Calvo Zueco, Silvia, 73730 Esslingen (DE)
(74) Vertreter: BRP Renaud & Partner mbB Rechtsanwälte Patentanwälte Steuerberater

(56) Entgegenhaltungen:
- EP-A1- 2 098 697
- EP-A1- 2 535 535
- DE-A1-102008 028 626
- DE-A1-102008 054 268
- DE-A1-102011 083 636
- DE-B3-102012 016 423
- DE-U1-202012 011 764
- JP-A- 2011 111 927

## Beschreibung

Die vorliegende Erfindung betrifft eine Abgasbehandlungseinrichtung für eine Abgasanlage einer Brennkraftmaschine, die bspw. in einem Kraftfahrzeug angeordnet sein kann, mit den Merkmalen des Oberbegriffs des Anspruchs 1.

Zur Nachbehandlung von Abgasen einer Brennkraftmaschine kann es erforderlich sein, ein flüssiges Reaktionsmittel in den Abgasstrom einzubringen. Bspw. kann es erforderlich sein, Wasser oder Kraftstoff in den Abgasstrom einzubringen. Von besonderem Interesse sind jedoch sogenannte SCR-Systeme, wobei SCR für "Selective Catalytic Reduction" steht. Bei einem derartigen SCR-System wird mithilfe eines Reduktionsmittels versucht, im Abgas enthaltene schädliche Stickoxide zu unschädlichem Stickstoff zu reduzieren. Als Reduktionsmittel kommt hierbei Ammoniak in Betracht. Dieses wird in der Regel in Form einer wässrigen Hamstofflösung in den Abgasstrom eingebracht. Durch Thermolyse und Hydrolyse entsteht daraus eine effiziente Mischung aus Ammoniak und Kohlendioxid, die es in Verbindung mit einem SCR-Katalysator ermöglicht, Stickoxide in Stickstoff und Wasser umzusetzen. Damit die jeweils gewünschte Reaktion möglichst effizient ablaufen kann, ist eine weitgehende Verdampfung des eingebrachten flüssigen Reaktionsmittels sowie eine möglichst homogene Durchmischung des Reaktionsmittels mit dem Abgasstrom erforderlich. Zu diesem Zweck kommen stationäre Mischer zum Einsatz, die in ein Gehäuse der Abgasbehandlungseinrichtung eingebaut sind, und zwar bezüglich des Abgasstroms stromab eines Injektors, zum Einbringen des Reduktionsmittels.

Da die Abgase einer Brennkraftmaschine je nach Betriebszustand relativ hohe Temperaturen erreichen können, ist eine effiziente Fixierung des Mischers im Gehäuse erforderlich. Des Weiteren handelt es sich bei Abgasbehandlungseinrichtungen um Produkte, die im Rahmen einer Großserie hergestellt werden. Hierzu muss der Aufbau der Abgasbehandlungseinrichtung möglichst kostengünstig realisierbar sein.

Eine gattungsgemäße Abgasbehandlungseinrichtung ist beispielsweise aus der DE 10 2012 016 423 B3 bekannt. Sie umfasst ein Gehäuse, durch das ein Abgaspfad hindurchführt, einen am Gehäuse angeordneten Injektor zum Einbringen eines Reduktionsmittels in einen dem Abgaspfad folgenden Abgasstrom und einen im Gehäuse angeordneten Mischer zum Durchmischen des Reaktionsmittels mit dem Abgasstrom. Dabei weist der Mischer einen Mantel auf, der einen vom Abgasstrom durchströmbaren Mischerquerschnitt umschließt. Ferner weist der Mischer mehrere Leitschaufeln auf, die an einer Mantelinnenseite vom Mantel abstehen und in den Mischerquerschnitt hineinragen. Schließlich ist der Mischer ein Blechformteil, bei dem der Mantel und die Leitschaufeln durch ein einziges Blechstück gebildet sind.

Eine ähnliche Abgasbehandlungseinrichtung mit einteiligem Mischer ist aus der DE 10 2011 083 636 A1 bekannt.

Aus der DE 10 2008 028 626 A1 ist ein mehrteiliger Mischer für eine Abgasanlage bekannt, der an einem ringförmigen Mantel nach außen abstehende Laschen aufweist, mit deren Hilfe der Mischer an einem Abgas führenden Rohr der Abgasanlage befestigt werden kann.

Aus der EP 2 535 535 A1 ist ein weiterer mehrteiliger Mischer bekannt, der an einem ringförmigen Mantel Durchgangsöffnungen aufweist, mit deren Hilfe der Mischer an einem Abgas führenden Rohr der Abgasanlage befestigt werden kann.

Die vorliegende Erfindung beschäftigt sich mit dem Problem, für eine Abgasbehandlungseinrichtung der vorstehend genannten Art eine verbesserte Ausführungsform anzugeben, die sich insbesondere durch eine preiswerte Herstellbarkeit auszeichnet. Gleichzeitig wird eine effiziente und dauerhafte Fixierung des Mischers im Gehäuse angestrebt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Mischer mit mehreren Laschen auszustatten, die von einem Mantel des Mischers nach außen abstehen und dabei in Laschenöffnungen eingreifen, die in einer den Mischer umgreifenden Gehäusewand des Gehäuses ausgebildet sind. Die mischerseitigen Laschen ermöglichen bei der Herstellung der Abgasbehandlungseinrichtung ein einfaches Positionieren des Mischers im Gehäuse, in dem die Laschen formschlüssig in die zugehörigen Laschenöffnungen eingreifen. Hierdurch ist es insbesondere möglich, den Mischer über die in die Laschenöffnungen eingreifenden Laschen am Gehäuse zumindest vorläufig zu fixieren, so dass eine endgültige Fixierung zu einem späteren Zeitpunkt durchgeführt werden kann. Bis dahin vereinfacht sich die Handhabung des Gehäuses mit eingesetztem Mischer und insbesondere die weitere Komplettierung bzw. Herstellung der Abgasbehandlungseinrichtung.

Des Weiteren ist von besonderem Interesse, dass der Mischer als Blechformteil konzipiert ist, das sich dadurch charakterisiert, dass der Mischer aus einem einzigen Blechstück, das den Mantel, davon abstehende Leitschaufeln und die vorgenannten Laschen aufweist, durch Umformung hergestellt ist, wobei der Umformung selbstverständlich Schneidvorgänge und Stanzvorgänge vorausgehen können. Ein derartiges einteiliges Blechformteil lässt sich besonders preiswert herstellen, einfach handhaben und in das Gehäuse einsetzen. Durch die Integration der Laschen an diesem Blechformteil kann auf zusätzliche, separate Befestigungsmittel zum Fixieren des Mischers im Gehäuse verzichtet werden.

Im Einzelnen weist der Mischer besagten Mantel auf, der einen von einem Abgasstrom durchströmbaren Mischerquerschnitt umschließt. Der Abgasstrom folgt im Betrieb der Abgasanlage einem Abgaspfad, der durch das Gehäuse der Abgasbehandlungseinrichtung hindurchführt. Die vorgenannten Leitschaufeln stehen an einer Mantelinnenseite vom Mantel ab und ragen in den Mischerquerschnitt hinein. Die Leitschaufeln können durch ihre geometrische Form sowie durch ihren Anstellwinkel gegenüber dem Abgasstrom eine Verwirbelung des Abgasstroms erzeugen, was für eine intensive Durchmischung zwischen Reaktionsmittel und Abgas vorteilhaft ist.

Gemäß einer vorteilhaften Ausführungsform können die Laschen jeweils mittels einer Schweißverbindung von außen am Gehäuse befestigt sein, wobei die jeweilige Schweißverbindung die zugehörige Laschenöffnung verschließt. Durch Anbringen der Schweißverbindungen an einer vom Mischer abgewandten Wandaußenseite der Gehäusewand lässt sich die zuvor genannte endgültige Fixierung des Mischers im Gehäuse auch bei geschlossenem Gehäuse durchführen, was die Herstellung der Abgasbehandlungseinrichtung erheblich vereinfacht. Durch Verwenden einer Schweißverbindung lassen sich gleichzeitig die Laschenöffnungen hinreichend gasdicht verschließen, um unerwünschte Leckagen im Bereich der Laschenöffnungen zu vermeiden.

Erfindungsgemäß ist der Mischer an seiner Mantelaußenseite über Stützzonen an einer Wandinnenseite der Gehäusewand radial abgestützt, wobei die Stützzonen in der Umfangsrichtung des Mantels verteilt und voneinander beabstandet sind. In der Folge ist radial zwischen der Mantelaußenseite und der Wandinnenseite außerhalb der Laschen und außerhalb der Stützzonen ein Luftspalt ausgebildet, der als thermische Isolation zwischen Mischer und Gehäuse wirkt. Mithilfe der in der Umfangsrichtung verteilten und voneinander beabstandeten Stützzonen erfolgt somit nur eine auf wenige Stellen begrenzte lokale Kontaktierung zwischen Mischer und Gehäuse bzw. zwischen Mantel und Gehäusewand, was einerseits größere Herstellungstoleranzen ermöglicht und andererseits eine Wärmeübertragung zwischen Mischer und Gehäuse durch Wärmeleitung auf wenige, kleine singuläre Stellen reduziert. Im Luftspalt dagegen findet eine Wärmeübertragung nur durch Wärmestrahlung statt, was einer effizienten thermischen Isolation entspricht. Eine radial gemessene Spaltbreite des Luftspalts kann dabei kleiner sein als eine Wandstärke des Mantels und/oder als eine Wandstärke der Gehäusewand im Bereich des Mischers.

Gemäß einer vorteilhaften Weiterbildung können die Stützzonen durch Erhebungen gebildet sein, die durch Umformung integral nur an der Gehäusewand ausgeformt sind. Alternativ ist auch eine Ausführungsform möglich, bei der die Stützzonen durch Erhebungen gebildet sind, die durch Umformung integral nur am Mantel ausgeformt sind. Ebenso sind Mischformen denkbar, bei denen die Stützzonen durch Erhebungen gebildet sind, die durch Umformung integral sowohl an der Gehäusewand als auch am Mantel ausgeformt sind. Bevorzugt ist jedoch eine Ausgestaltung, bei der die Erhebungen in die Gehäusewand integriert sind.

Besonders vorteilhaft ist dabei eine Weiterbildung, bei welcher die Stützzonen jeweils im Bereich der Laschen ausgebildet sind. Mit anderen Worten, die jeweilige Lasche und die zugehörige Laschenöffnung sind dabei innerhalb einer derartigen Stützzone ausgebildet. Durch die Zusammenlegung der Stützzonen und der Steckverbindungen zwischen den Laschen und den Laschenöffnungen lässt sich die Anzahl der Kontaktstellen zwischen Mantel und Gehäusewand reduzieren, was die thermische Isolation des Mischers gegenüber dem Gehäuse verbessert. Grundsätzlich ist jedoch auch eine Ausführungsform denkbar, bei welcher die Stützzonen und die Laschen separat ausgebildet und in der Umfangsrichtung des Mantels voneinander beabstandet sind.

Gemäß einer anderen vorteilhaften Ausführungsform kann das Gehäuse zumindest in einem den Mischer enthaltenden Gehäuseabschnitt zweischalig ausgestaltet sein, derart, dass sich die Mantelaußenseite in einem ersten Umfangsabschnitt entlang einer ersten Gehäuseschale erstreckt und entlang eines zweiten Umfangsabschnitts entlang einer zweiten Gehäuseschale erstreckt. Die zweischalige Ausgestaltung des Gehäuses vereinfacht den Einbau des Mischers in das Gehäuse. Insbesondere lässt sich der Mischer somit in die eine Gehäuseschale einsetzen, während die andere Gehäuseschale dann anschließend angebaut werden kann. Insbesondere für den Fall, dass der Mischer einen in der Umfangsrichtung geschlossen umlaufenden Mantel aufweist, kann sich ein axiales Einführen des Mischers in ein geschlossenes Gehäuse aufgrund der radial nach außen abstehenden Laschen als schwierig erweisen. Durch die Schalenbauweise kann nun das Gehäuse zum Einsetzen des Mischers geöffnet werden. Des Weiteren ermöglicht die zweischalige Bauweise eine Gehäusegeometrie, die von einer konventionellen zylindrischen Bauweise abweicht.

Gemäß einer vorteilhaften Weiterbildung können im Bereich der ersten Gehäuseschale und im Bereich der zweiten Gehäuseschale jeweils wenigstens eine solche Stützzone ausgebildet sein. Somit ist der Mischer sowohl an der ersten Gehäuseschale als auch an der zweiten Gehäuseschale über derartige Stützzonen abgestützt.

Gemäß einer anderen Weiterbildung können an der ersten Gehäuseschale und an der zweiten Gehäuseschale jeweils wenigstens eine solche Laschenöffnung ausgebildet sein. Durch diese Bauform wird erreicht, dass der Mischer sowohl an der ersten Gehäuseschale als auch an der zweiten Gehäuseschale fixiert ist.

Zweckmäßig kann der Mischerquerschnitt flach sein, so dass eine Breite des Mischers größer ist als eine Höhe des Mischers. Insbesondere ist der Mischer mindestens doppelt so breit wie hoch. Die Breite und die Höhe sind dabei senkrecht zueinander und senkrecht zu einer Längsrichtung gemessen, die durch die Durchströmungsrichtung des Mischers bzw. durch die Strömungsrichtung des Abgasstroms definiert ist.

Zweckmäßig können die Leitschaufeln geradlinig und parallel zueinander verlaufen. Insbesondere in Verbindung mit einem flachen Querschnitt ergibt sich mit derartigen parallelen Leitschaufeln eine effiziente Strömungsleitwirkung für die Leitschaufeln. Bei flachem Mantelquerschnitt erstrecken sich die geradlinigen Leitschaufeln parallel zur Höhenrichtung. Dabei ist zumindest eine Leitschaufelreihe am Mantel ausgebildet, bei der die Leitschaufeln in der Breitenrichtung des Mantelquerschnitts nebeneinander angeordnet sind.

Für eine besonders einfache Herstellbarkeit des Mischers sorgt eine Bauform, bei welcher die Leitschaufeln jeweils einenends fest mit dem Mantel verbunden sind, während sie anderenends freistehend angeordnet sind. Die Leitschaufeln stehen somit vom Mantel ab und ragen freistehend in den Mischerquerschnitt hinein. Thermische Dehnungseffekte können hier keinerlei Verspannung der Leitschaufeln innerhalb des Mischers erzeugen. Auch können Relativbewegungen der Leitschaufeln gegenüber dem Mantel keine Geräusche erzeugen.

Besonders vorteilhaft ist eine Ausführungsform, bei welcher der Mantel an einer anströmseitigen oder abströmseitigen Mischerseite einen ersten Umfangsabschnitt und einen zweiten Umfangsabschnitt aufweist, die sich gegenüber liegen. Dies gilt insbesondere für eine Bauform mit flachem Mischerquerschnitt. Die sich gegenüberliegenden Umfangsabschnitte erstrecken sich dann jeweils entlang der Breitenrichtung und liegen sich in der Höhenrichtung gegenüber. Zweckmäßig kann nun vorgesehen sein, dass der erste Umfangsabschnitt erste Leitschaufeln aufweist, die vom ersten Umfangsabschnitt in Richtung zum zweiten Umfangsabschnitt abstehen. Somit ist am ersten Umfangsabschnitt eine erste Leitschaufelreihe ausgebildet, bei der die ersten Leitschaufeln in der Breitenrichtung nebeneinander angeordnet sind. Ferner weist der zweite Umfangsabschnitt zweite Leitschaufeln auf, die vom zweiten Umfangsabschnitt in Richtung zum ersten Umfangsabschnitt abstehen. Somit besitzt der zweite Umfangsabschnitt eine zweite Leitschaufelreihe, in der die zweiten Leitschaufeln in der Breitenrichtung nebeneinander angeordnet sind. Besonders vorteilhaft ist nun eine Ausführungsform, bei welcher die ersten Leitschaufeln in der Strömungsrichtung des Abgasstroms versetzt zu den zweiten Leitschaufeln angeordnet sind. Auf diese Weise werden die Leitschaufeln der einen Leitschaufelreihe im Betrieb der Abgasanlage früher angeströmt als die Leitschaufeln der anderen Leitschaufelreihe. Hierdurch ist es insbesondere möglich, an der jeweiligen Mischerseite eine größere Anzahl an Leitschaufeln anzuordnen, da sowohl der erste Umfangsabschnitt als auch der zweite Umfangsabschnitt hierzu genutzt werden können. Darüber hinaus ist es ebenso möglich, die ersten Leitschaufeln und die zweiten Leitschaufeln mit unterschiedlichen Anstellwinkeln anzuordnen, insbesondere können die ersten Leitschaufeln entgegengesetzt zu den zweiten Leitschaufeln angestellt sein. Hierdurch lässt sich die Durchmischung erheblich verbessern. Darüber hinaus ist es durch diese Bauweise besonders einfach möglich, spezielle Strömungsgeometrien, die sich innerhalb des Abgaspfads im Bereich des Mischers ausbilden, zu berücksichtigen, um die Durchmischung von Reaktionsmittel und Abgasstrom zu optimieren. Hierzu kann es erforderlich sein, die ersten Leitschaufeln und/oder die zweiten Leitschaufeln nur über einen Teil der Höhe des Mischerquerschnitts anzuordnen, bspw. können sich die ersten Leitschaufeln jeweils über 50 % bis 75 % der Höhe des Mischerquerschnitts erstrecken, während sich die zweiten Leitschaufeln zwischen 25 % und 50 % der Höhe des Mischerquerschnitts erstrecken. Insbesondere können die ersten Leitschaufeln eine größere Höhe aufweisen als die zweiten Leitschaufeln. Ebenso ist eine Ausführungsform denkbar, bei welcher der Mischer sowohl an seiner Anströmseite als auch an seiner Abströmseite jeweils zwei Leitschaufelreihen aufweist, die in der Strömungsrichtung des Abgases zueinander versetzt angeordnet sein können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht einer Abgasbehandlungseinrichtung,
- Fig. 2: eine Ansicht der Abgasbehandlungseinrichtung entsprechend Blickrichtung II in Fig. 1,
- Fig. 3: eine Schnittansicht der Abgasbehandlungseinrichtung entsprechend Schnittlinien III in Fig. 2,
- Fig. 4: eine vergrößerte Ansicht eines Details IV aus Fig. 3,
- Fig. 5: eine Ansicht der Abgasbehandlungseinrichtung gemäß Blickrichtung V in Fig. 1,
- Fig. 6: eine Schnittansicht der Abgasbehandlungseinrichtung gemäß Schnittlinien VI in Fig. 5,
- Fig. 7: ein vergrößertes Detail VII aus Fig. 6,
- Fig. 8: eine Ansicht wie in Fig. 2, jedoch bei einer anderen Ausführungsform,
- Fig. 9: eine Schnittansicht entsprechend Schnittlinien IX in Fig. 8,
- Fig. 10: ein vergrößertes Detail X aus Fig. 9,
- Fig. 11: eine Ansicht wie in Fig. 5, jedoch bei der anderen Ausführungsform,
- Fig. 12: eine Schnittansicht entsprechend Schnittlinien XII aus Fig. 11,
- Fig. 13: ein vergrößertes Detail XIII aus Fig. 12,
- Fig. 14: eine Frontansicht eines Mischers,
- Fig. 15: eine Seitenansicht des Mischers entsprechend Blickrichtung XV in Fig. 14,
- Fig. 16: eine Seitenansicht des Mischers entsprechend Blickrichtung XVI in Fig. 14,
- Fig. 17: eine Schnittansicht des Mischers entsprechend Schnittlinien XVII in Fig. 16,
- Fig. 18: ein vergrößertes Detail XVIII aus Fig. 17.

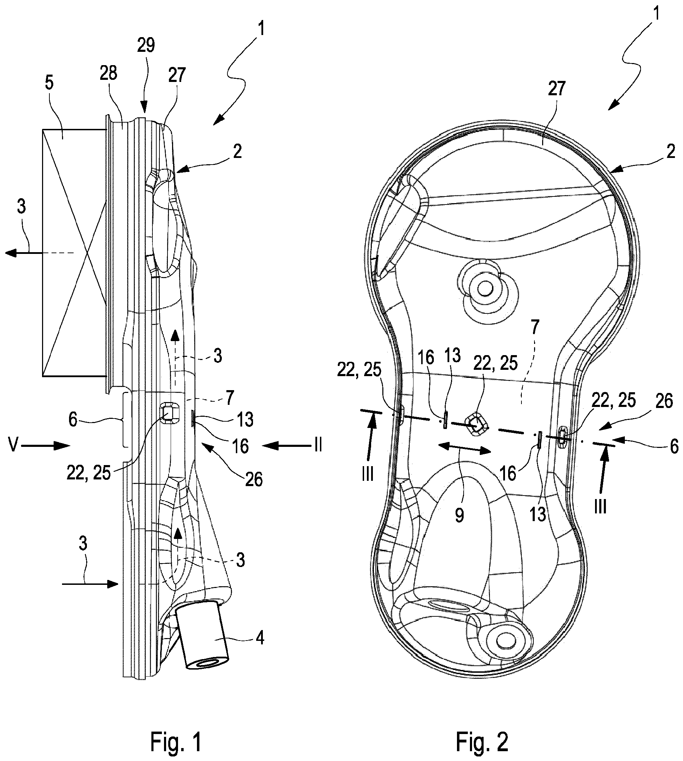

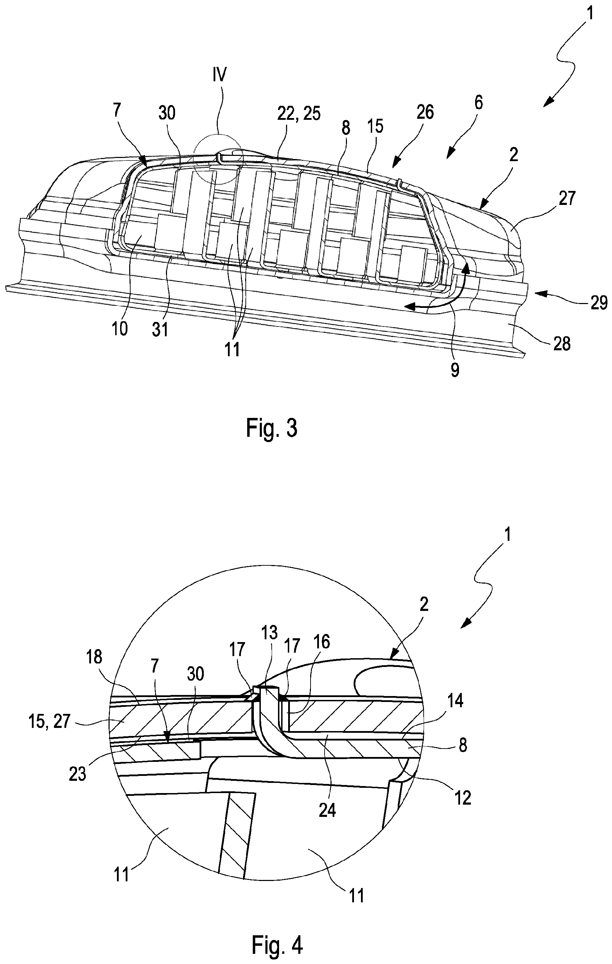

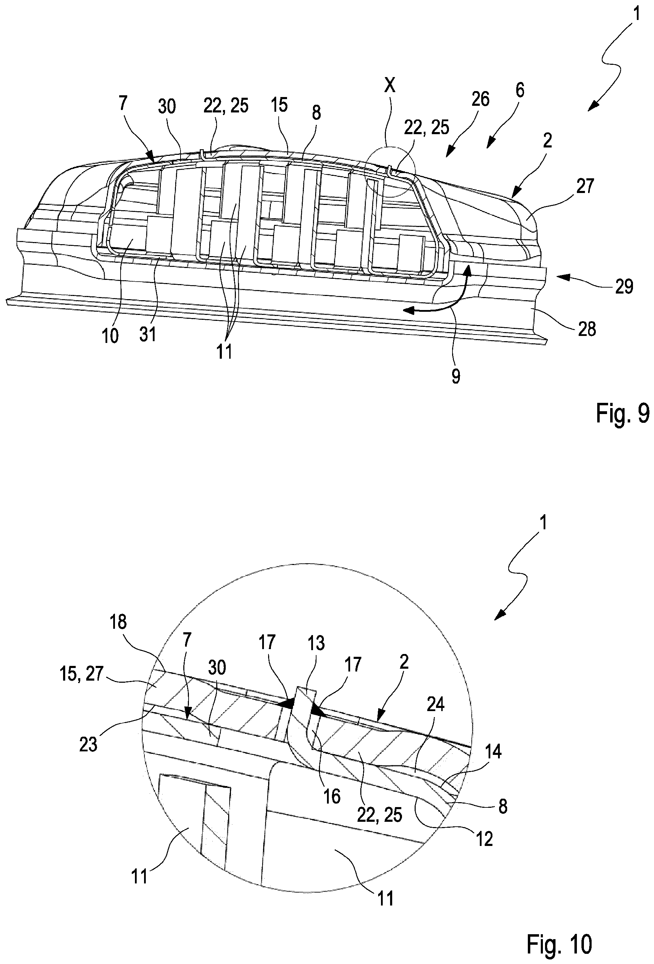

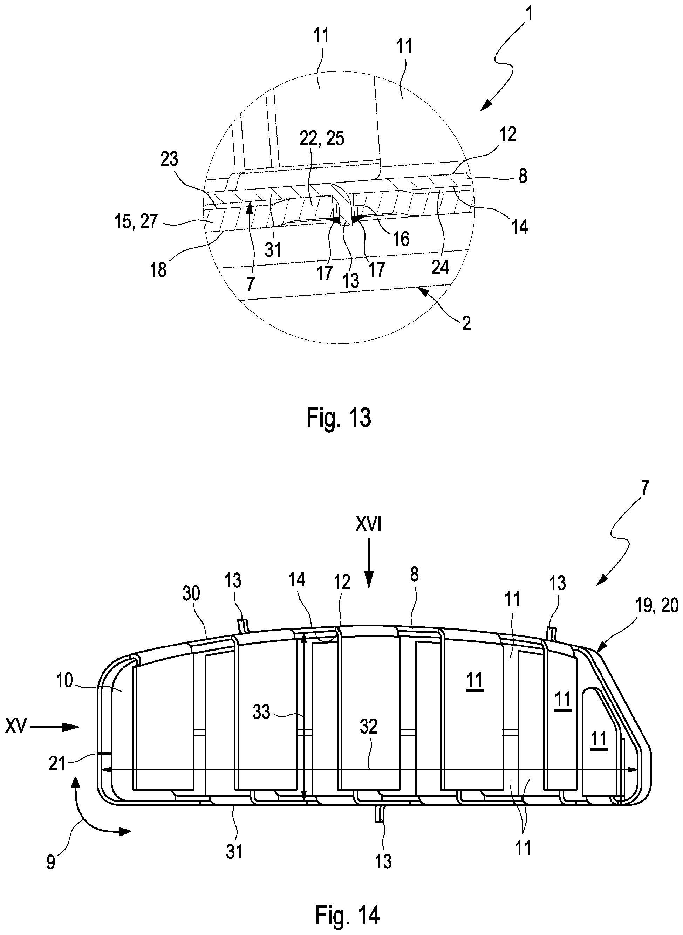

Entsprechend Fig. 1 umfasst eine hier nur teilweise dargestellte Abgasbehandlungseinrichtung 1 , die für eine Verwendung in einer Abgasanlage einer Brennkraftmaschine vorgesehen ist, ein ebenfalls nur teilweise dargestelltes Gehäuse 2, durch das ein durch Pfeile angedeuteter Abgaspfad 3 hindurchführt. Die Abgasbehandlungseinrichtung 1 umfasst außerdem zumindest einen Injektor 4, der am Gehäuse 2 angeordnet ist und mit dem ein Reaktionsmittel in einen Abgasstrom eingebracht werden kann, der im Betrieb der Abgasanlage dem Abgaspfad 3 folgt. Entsprechend einer bevorzugten Ausführungsform handelt es sich bei der Abgasbehandlungseinrichtung 1 um ein SCR-System, bei dem mithilfe des Injektors 4 eine wässrige Harnstofflösung in den Abgasstrom eingesprüht werden kann. Im Gehäuse 2 ist dann im Abgaspfad 3 stromab des Injektors 4 ein SCR-Katalysator 5 angeordnet, der eine Reduktion von Stickoxiden mittels Ammoniak und Kohlendioxid zu Stickstoff und Wasser ermöglicht. Im Gehäuse 2 ist außerdem in einem durch eine geschweifte Klammer angedeuteten Mischbereich 6 ein statischer Mischer 7 angeordnet, der in den Schnittansichten der Fig. 3, 4, 6, 7, 9, 10, 12, 13 sowie in den Ansichten der Figuren 14 bis 18 erkennbar ist. Der Mischer 7 dient zum Durchmischen des Reaktionsmittels mit dem Abgasstrom. Hierzu ist der Mischer 7 im Abgaspfad 3 stromab des Injektors 4 und stromauf des SCR-Katalysators 5 angeordnet.

Wie sich insbesondere den Ansichten der Fig. 14 bis 18 entnehmen lässt, weist der Mischer 7 einen Mantel 8 auf, der in einer Umfangsrichtung 9 einen vom Abgasstrom durchströmbaren Mischerquerschnitt 10 umschließt. Ferner weist der Mischer 7 mehrere Leitschaufeln 11 auf, die an einer Mantelinnenseite 12 vom Mantel 8 abstehen und in den Mischerquerschnitt 10 hineinragen. Wie sich insbesondere den Detailansichten der Figuren 4, 7, 10, 13 und 18 entnehmen lässt, weist der Mischer 7 außerdem mehrere Laschen 13 auf, die jeweils an einer Mantelaußenseite 14 vom Mantel (8) nach außen abstehen. Komplementär zu den Laschen 13 sind in einer Gehäusewand 15 des Gehäuses 2 Laschenöffnungen 16 ausgebildet, wobei jede Lasche 13 in eine solche Laschenöffnung 16 hineinragt. Dabei ist für jede Lasche 13 eine separate Laschenöffnung 16 vorgesehen. Die in die Laschenöffnungen 16 eingreifenden Laschen 13 bewirken eine Fixierung des Mischers 7 im Gehäuse 2. Diese Fixierung erfolgt dabei durch Formschluss. Eine endgültige Festlegung bzw. eine endfeste Fixierung des Mischers 7 im Gehäuse 2 kann dabei mittels Schweißverbindungen 17 erfolgen, mit denen die jeweilige Lasche 13 an einer Gehäuseaußenseite 18 an der Gehäusewand 15 befestigt ist und zwar zweckmäßig derart, dass dabei gleichzeitig die zugehörige Laschenöffnung 16 verschlossen wird. Insbesondere kann die jeweilige Schweißverbindung 17 als eine entlang der Laschenöffnung 16 geschlossen um die jeweilige Lasche 13 umlaufende Schweißnaht ausgebildet sein. Anstelle einer umlaufenden Schweißnaht kann auch eine Pendelnaht vorgesehen sein, die über die jeweilige Laschenöffnung 16 hinweg verläuft.

Wie sich insbesondere den Figuren 14 bis 17 entnehmen lässt, ist der Mischer 7 vorzugsweise als Blechformteil 19 konfiguriert, das durch ein einziges Blechstück 20 gebildet ist, das den Mantel 8, die Leitschaufeln 11 und die Laschen 13 umfasst. In einem Ausgangszustand ist das Blechstück 20 eben. Die Leitschaufeln 11 und die Laschen 13 werden freigeschnitten, bspw. durch einen Stanzvorgang oder einen Schneidvorgang. Anschließend werden die Leitschaufeln 11 und die Laschen 13 gegenüber dem übrigen Blechstück 20 abgewinkelt. Der übrige Bereich des Blechstücks 20 bildet dadurch den Mantel 8, der durch Umbiegen in der Umfangsrichtung 9 bevorzugt soweit umgebogen wird, dass seine Längsenden einen Stoß 21 bilden.

Zweckmäßig ist der Mischer 7 an seiner Mantelaußenseite 14 über Stützzonen 22 an einer Wandinnenseite 23 der Gehäusewand 15 radial abgestützt. Dabei sind mehrere derartige Stützzonen 22 vorgesehen, die in der Umfangsrichtung 9 des Mantels 8 verteilt und voneinander beabstandet angeordnet sind. Mithilfe dieser Stützzonen 22 wird erreicht, dass sich der Mischer 7 nur lokal über diese Stützzonen 22 am Gehäuse 2 abstützt. Insbesondere besitzt der Mischer 7 dadurch außerhalb dieser Stützzonen 22 und außerhalb der Steckverbindungen, die jeweils durch eine in die zugehörige Laschenöffnung 16 eingesteckte Lasche 13 gebildet sind, keinen körperlichen Kontakt zum Gehäuse 2. Somit ist radial zwischen der Mantelaußenseite 14 und der Wandinnenseite 23 außerhalb der Laschen 13 und außerhalb der Stützzonen 22 ein Luftspalt 24 ausgebildet. Mithilfe dieses Luftspalts 24 wird eine Luftspaltisolation zwischen Mischer 7 und Gehäuse 2 geschaffen.

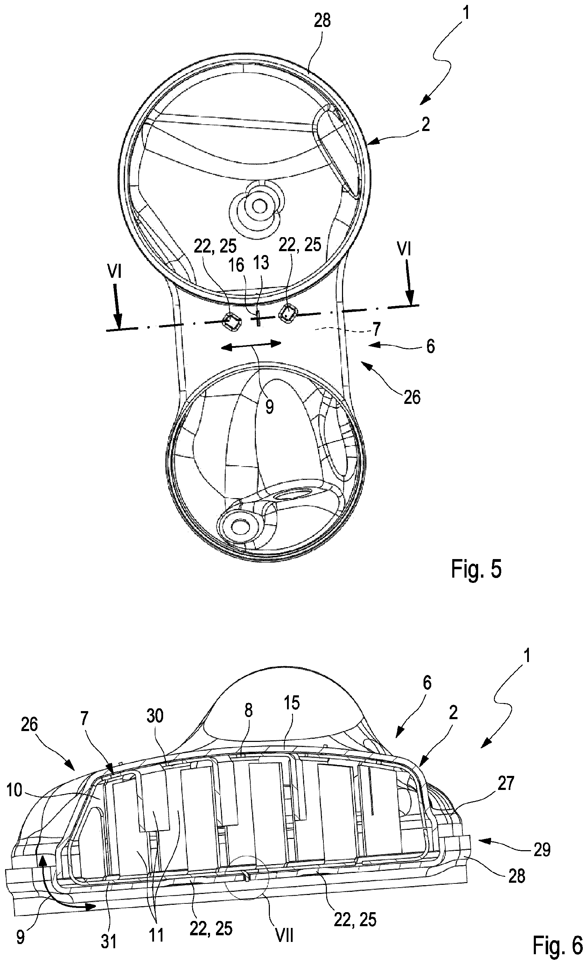

Die Stützzonen 22 sind durch Erhebungen 25 gebildet, die bei den hier gezeigten Ausführungsformen jeweils durch Umformung integral an der Gehäusewand 15 ausgeformt sind. Dementsprechend stehen die Erhebungen 25 in Richtung Mischer 7 nach innen vom Gehäuse 2 bzw. von der Gehäusewand 15 ab. Bei der in den Figuren 1 bis 7 gezeigten Ausführungsform sind die Stützzonen 22 in der Umfangsrichtung 9 von den Laschen 13 beabstandet positioniert, in der Ansicht der Fig. 2 ist eine Stützzone 22 in der Umfangsrichtung 9 zwischen zwei benachbarten Laschen 13 angeordnet. In der Ansicht der Fig. 5 ist dagegen eine Lasche 13 in der Umfangsrichtung 9 zwischen zwei benachbarten Stützzonen 22 angeordnet.

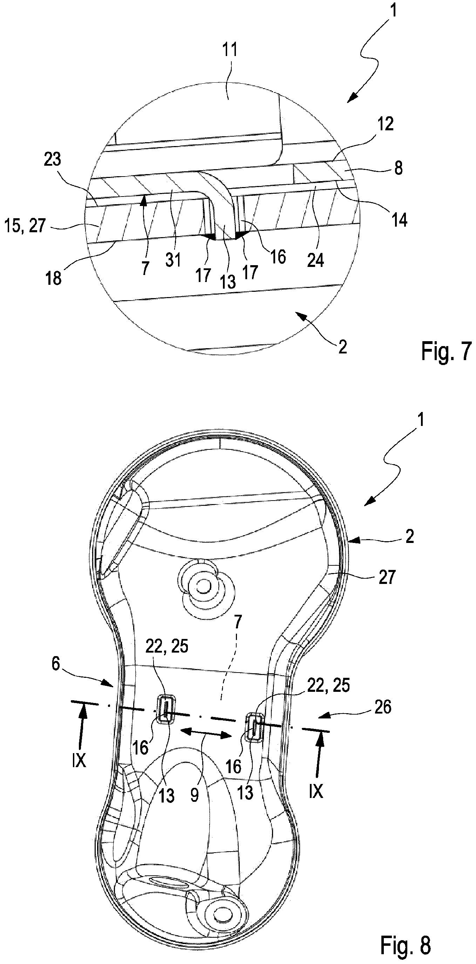

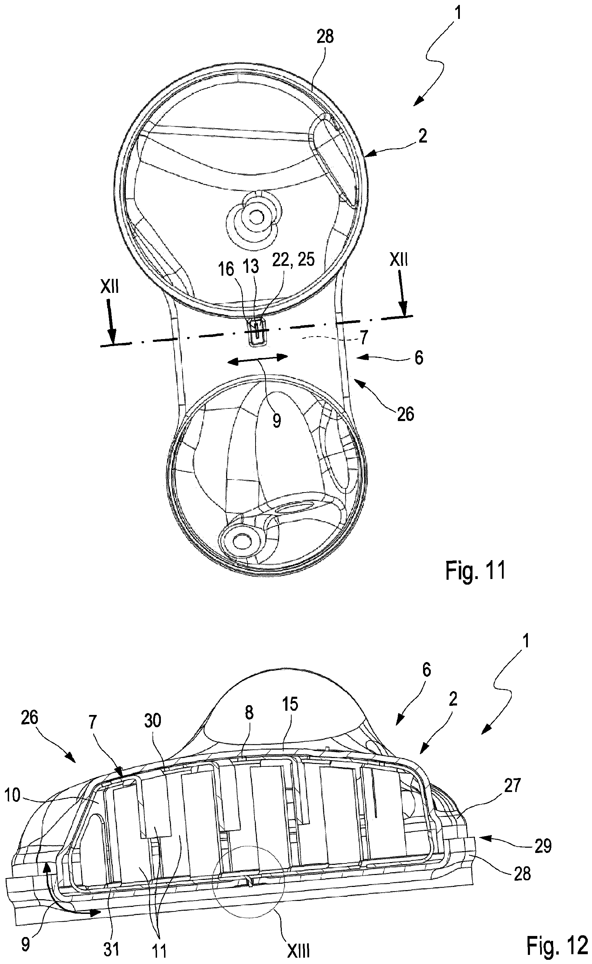

Im Unterschied dazu zeigen die Figuren 8 bis 13 eine Ausführungsform, bei welcher die Stützzonen 22 jeweils im Bereich der Laschen 13 ausgebildet sind. In diesem Fall befindet sich die jeweilige Laschenöffnung 16 innerhalb der jeweiligen Stützzone 22. Dementsprechend ist auch die jeweilige Lasche 16 innerhalb der jeweiligen Stützzone 22 angeordnet. In der Ansicht der Fig. 8 sind zwei Stützzonen 22 erkennbar, in denen jeweils zentral der Eingriff zwischen Lasche 13 und Laschenöffnung 16 erfolgt. Im Unterschied dazu ist bei der Ansicht der Fig. 11 nur eine Stützzone 22 erkennbar, in der die jeweilige Lasche 13 in die zugehörige Laschenöffnung 16 eingreift.

Wie sich insbesondere den Figuren 3, 6, 9 und 12 entnehmen lässt, ist das Gehäuse 2 in dem hier gezeigten Gehäuseabschnitt 26, der den Mischer 7 enthält, zweischalig ausgestaltet, so dass eine erste Schale 27 und eine zweite Schale 28 vorgesehen sind, die ineinandergesteckt bzw. aneinander angebaut sind. Im gezeigten Beispiel ist eine im Wesentlichen ebene Verbindungszone 29 vorgesehen, in der die beiden Gehäuseschalen 27, 28 aneinander gebaut sind.

Der Mischer 7 ist in den zweischaligen Gehäuseabschnitt 26 so eingebaut, dass sich ein erster Umfangsabschnitt 30 des Mantels 8 entlang der ersten Gehäuseschale 27 erstreckt, während sich ein zweiter Umfangsabschnitt 31 des Mantels 8 entlang der zweiten Gehäuseschale 28 erstreckt. Bei den hier gezeigten Beispielen weist der erste Umfangsabschnitt 30 zwei Laschen 13 auf, und die erste Gehäuseschale 27 weist die beiden zugehörigen Laschenöffnungen 16 auf. Der zweite Umfangabschnitt 31 weist dagegen nur eine einzige Lasche 13 auf. Die zweite Gehäuseschale 28 weist die dazu passende Laschenöffnung 16 auf. Sowohl an der ersten Gehäuseschale 27 als auch an der zweiten Gehäuseschale 28 sind im Mischerbereich 6 die Erhebungen 25 durch einen Prägevorgang oder dergleichen ausgeformt, um die Kontaktzonen 22 zu bilden.

Wie sich insbesondere den Figuren 14 bis 17 entnehmen lässt, ist der Mischerquerschnitt 10 zweckmäßig flach, so dass eine Breite 32 des Mischers 7 größer ist als eine Höhe 33 des Mischers 7. In Fig. 14 sind hierbei die Innenmaße eingezeichnet. Entsprechendes gilt dann auch für die Außenmaße. Im Beispiel ist die Breite 32 mindestens zwei mal so groß wie die Höhe 33.

Ferner sind alle Leitschaufeln 11 hier als geradlinige Leitschaufeln 11 konfiguriert, die jeweils parallel zur Höhenrichtung ausgerichtet sind. Somit verlaufen sämtliche Leitschaufeln 11 parallel zueinander. Ferner ragen die Leitschaufeln 11 jeweils freistehend in den Mischerquerschnitt 10 hinein. Sie besitzen somit freie Enden, die keinen Kontakt zum Mantel 8 besitzen.

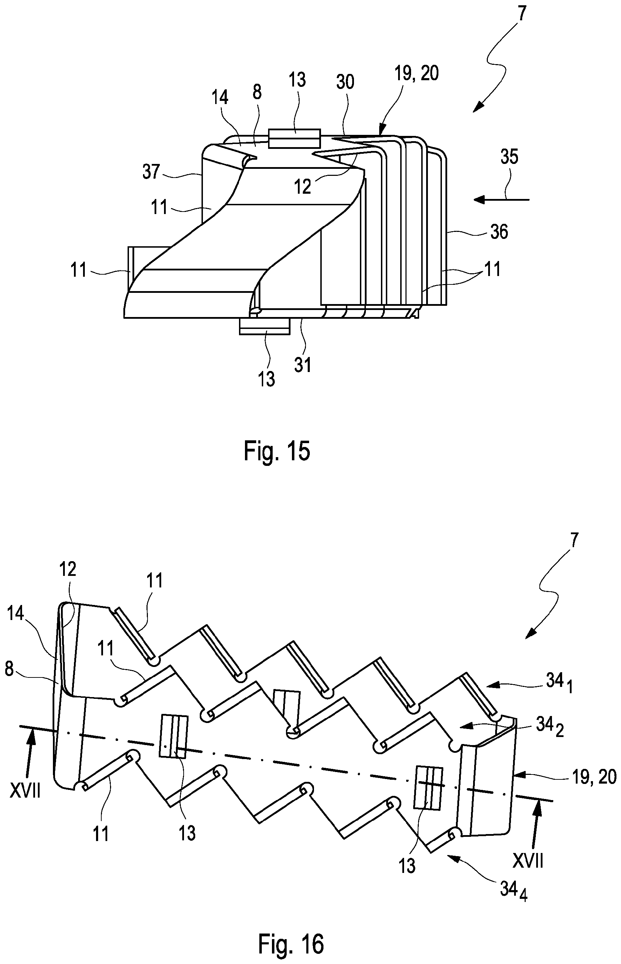

Beim hier vorgestellten Mischer 7 sind insgesamt vier Leitschaufelreihen 34 ausgebildet, nämlich eine erste Leitschaufelreihe 34₁, eine zweite Leitschaufelreihe 34₂, eine dritte Leitschaufelreihe 34₃ und eine vierte Leitschaufelreihe 34₄. In Fig. 15 ist eine Strömungsrichtung 35 des Abgasstroms durch einen Pfeil angedeutet. Der Mantel 8 weist an der anströmseitigen Mischerseite 36 sowie an der abströmseitigen Mischerseite 37 jeweils einen ersten Umfangsabschnitt 30 und einen zweiten Umfangsabschnitt 31 auf, die sich beim flachen Mischerquerschnitt 10 gegenüberliegen. Der erste Umfangsabschnitt 30 der anströmseitigen Mischerseite 36, die auch als Anströmseite 36 oder Einlassseite 36 bezeichnet werden kann, weist Leitschaufeln 11 auf, die vom ersten Umfangsabschnitt 30 in Richtung zum zweiten Umfangsabschnitt 31 abstehen und die im Beispiel die vierte Leitschaufelreihe 34₄ bilden. Der zweite Umfangsabschnitt 31 weist an der anströmseitigen Mischerseite 36, die auch als Anströmseite 36 oder Einlassseite 36 bzeichnet werden kann, Leitschaufeln 11 auf, die vom zweiten Umfangsabchnitt 31 in Richtung zum ersten Umfangsabschnitt 30 abstehen. Diese Leitschaufeln 11 bilden im Beispiel die dritte Leitschaufelreihe 34₃. An der abströmseitigen Mischerseite 37, die auch als Abströmseite 37 oder als Auslassseite 37 bezeichnet werden kann, weist der erste Umfangsabschnitt 30 Leitschaufeln 11 auf, die vom ersten Umfangsabschnitt 30 in Richtung zum zweiten Umfangsabschnitt 31 abstehen und die im Beispiel die zweite Leitschaufelreihe 34₂ bilden. Schließlich weist der Mantel 8 an seiner abströmseitigen Mischerseite 37 am zweiten Umfangsabschnitt 31 Leitschaufeln 11 auf, die vom zweiten Umfangsabschnitt 31 in Richtung zum ersten Umfangsabschnitt 30 abstehen und die im Beispiel die erste Leitschaufelreihe 34₁ bilden.

An der jeweiligen Mischerseite 36, 37 sind die Leitschaufeln 11 des ersten Umfangsabschnitts 30 gegenüber den Leitschaufeln 11 des zweiten Umfangsabschnitts 31 in der Strömungsrichtung 35 versetzt angeordnet. Somit werden die hier gezeigten vier Leitschaufelreihen 34 vom Abgasstrom nacheinander umströmt bzw. durchströmt. Die beiden Leitschaufelreihen 34₃ und 34₄ der anströmseitigen Mischerseite 36 erstrecken sich dabei jeweils über die gesamte Höhe 33 des Mischers 7. Dabei sind die Leitschaufeln 11 der dritten Leitschaufelreihe 34₃ und die Leitschaufeln 11 der vierten Leitschaufelreihe 34₄ entgegengesetzt zum Abgasstrom angestellt.

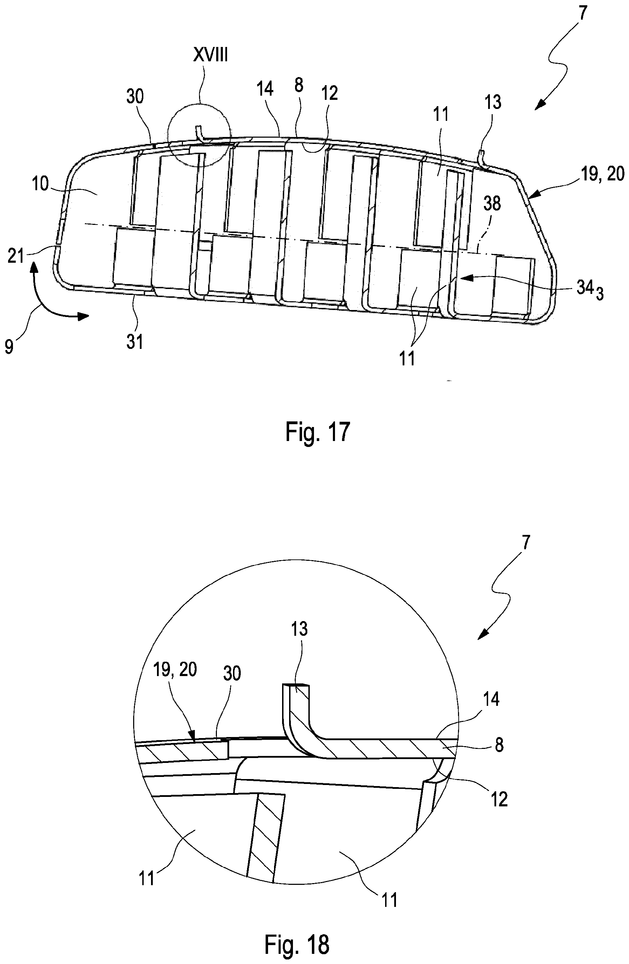

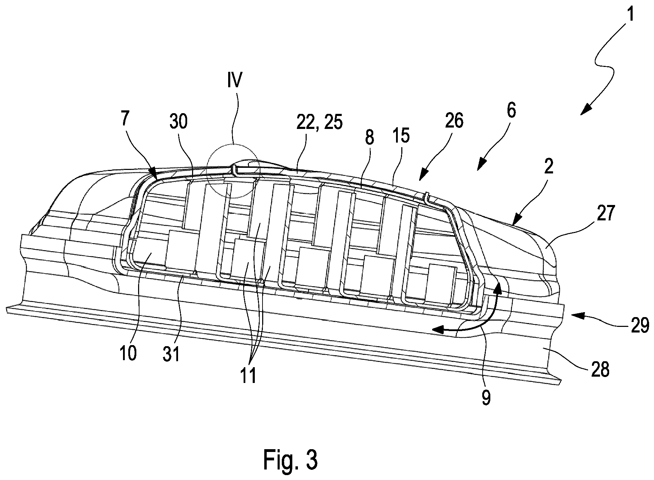

Entgegengesetzte Anstellwinkel sind auch bei den beiden Leitschaufelreihen 34₁ und 34₂ der abströmseitigen Mischerseite 37 vorgesehen. Dort ist außerdem vorgesehen, dass die Leitschaufeln der ersten Leitschaufelreihe 34₁ und der zweiten Leitschaufelreihe 34₂ verschieden groß ausgebildet sind. Insbesondere ist erkennbar, dass sich die Leitschaufeln 11 der ersten Leitschaufelreihe 34₁ und der zweiten Leitschaufelreihe 34₂ jeweils nicht über die gesamte Höhe 33 des Mischers 7 erstrecken. Vielmehr lässt sich den Figuren 14 und 17 entnehmen, dass je eine Leitschaufel 11 der ersten Leitschaufelreihe 34₁ und je eine Leitschaufel 11 der zweiten Leitschaufelreihe 34₂ gemeinsam die Höhe 33 des Mischers 7 erreichen. Insbesondere ist eine Trennebene 38 erkennbar, die zwischen den beiden Umfangsabschnitten 30, 31 liegt. Die Leitschaufeln 11 der ersten Leitschaufelreihe 34₁ erstrecken sich vom zweiten Umfangsabschnitt 31 nur bis zur Trennebene 38. Die Leitschaufeln 11 der zweiten Leitschaufelreihe 34₂ erstrecken sich dagegen vom ersten Umfangsabschnitt 30 nur bis zur Trennebene 38.

## Patentansprüche

1. Abgasbehandlungseinrichtung für eine Abgasanlage einer Brennkraftmaschine,
- mit einem Gehäuse (2), durch das ein Abgaspfad (3) hindurchführt,
- mit einem am Gehäuse (2) angeordneten Injektor (4) zum Einbringen eines Reduktionsmittels in einen dem Abgaspfad (3) folgenden Abgasstrom,
- mit einem im Gehäuse (2) angeordneten Mischer (7) zum Durchmischen des Reaktionsmittels mit dem Abgasstrom,
- wobei der Mischer (7) einen Mantel (8) aufweist, der einen vom Abgasstrom durchströmbaren Mischerquerschnitt (10) umschließt,
- wobei der Mischer (7) mehrere Leitschaufeln (11) aufweist, die an einer Mantelinnenseite (13) vom Mantel (8) abstehen und in den Mischerquerschnitt (10) hineinragen,
- wobei der Mischer (7) ein Blechformteil (19) ist, bei dem der Mantel (8) und die Leitschaufeln (11) durch ein einziges Blechstück (20) gebildet sind,
**dadurch gekennzeichnet,**
- **dass** der Mischer (7) mehrere Laschen (13) aufweist, die an einer Mantelaußenseite (14) vom Mantel (8) abstehen und jeweils in eine am Gehäuse (2) ausgebildete, eine Gehäusewand (15) durchdringende Laschenöffnung (16) hineinragen,
- **dass** die Laschen (13) ebenfalls durch das Blechstück (20) gebildet sind,
- **dass** der Mischer (7) an seiner Mantelaußenseite (14) über Stützzonen (22) an einer Wandinnenseite (23) der Gehäusewand (15) radial abgestützt ist,
- **dass** die Stützzonen (22) in der Umfangsrichtung (9) des Mantels (8) verteilt und voneinander beabstandet angeordnet sind,
- **dass** radial zwischen der Mantelaußenseite (14) und der Wandinnenseite (23) außerhalb der Laschen (13) und außerhalb der Stützzonen (22) ein Luftspalt (24) ausgebildet ist.

2. Einrichtung nach Anspruch 1,
**dadurch gekennzeichnet,**
**dass** die Laschen (13) jeweils mittels einer Schweißverbindung (17) von außen am Gehäuse (2) befestigt sind, wobei die jeweilige Schweißverbindung (17) die zugehörige Laschenöffnung (16) verschließt.

3. Einrichtung nach Anspruch 1 oder 2,
**dadurch gekennzeichnet,**
**dass** die Stützzonen (22) durch Erhebungen (25) gebildet sind, die durch Umformung integral nur an der Gehäusewand (15) oder nur am Mantel (8) oder sowohl an der Gehäusewand (15) als auch am Mantel (8) ausgeformt sind.

4. Einrichtung nach einem der Ansprüche 1 bis 3,
**dadurch gekennzeichnet,**
**dass** sie Stützzonen (22) jeweils im Bereich der Laschen (13) ausgebildet sind.

5. Einrichtung nach einem der Ansprüche 1 bis 4,
**dadurch gekennzeichnet,**
**dass** das Gehäuse (2) zumindest in einem den Mischer (7) enthaltenden Gehäuseabschnitt (26) zweischalig ausgestaltet ist, derart, dass sich die Mantelaußenseite (14) in einem ersten Umfangsabschnitt (30) entlang einer ersten Gehäuseschale (27) erstreckt und entlang eines zweiten Umfangsabschnitts (31) entlang einer zweiten Gehäuseschale (28) erstreckt.

6. Einrichtung nach Anspruch 5,
**dadurch gekennzeichnet,**
**dass** im Bereich der ersten Gehäuseschale (27) und im Bereich der zweiten Gehäuseschale (28) jeweils eine solche Stützzone (22) ausgebildet ist.

7. Einrichtung nach Anspruch 5 oder 6,
**dadurch gekennzeichnet,**
**dass** an der ersten Gehäuseschale (27) und an der zweiten Gehäuseschale (28) jeweils wenigstens eine solche Laschenöffnung (16) ausgebildet ist.

8. Einrichtung nach einem der Ansprüche 1 bis 7,
**dadurch gekennzeichnet,**
**dass** der Mantelquerschnitt (10) flach ist, so dass eine Breite (32) größer ist als eine Höhe (33).

9. Einrichtung nach einem der Ansprüche 1 bis 8,
**dadurch gekennzeichnet,**
**dass** die Leitschaufeln (11) geradlinig sind und parallel zueinander verlaufen.

10. Einrichtung nach einem der Ansprüche 1 bis 9,
**dadurch gekennzeichnet,**
**dass** die Leitschaufeln (11) jeweils einenends fest mit dem Mantel (8) verbunden sind und jeweils anderenends freistehend angeordnet sind.

11. Einrichtung nach einem der Ansprüche 1 bis 10,
**dadurch gekennzeichnet,**
- **dass** der Mantel (8) an einer anströmseitigen Mischerseite (36) und/oder an einer abströmseitigen Mischerseite (37) einen ersten Umfangsabschnitt (30) und einen zweiten Umfangsabschnitt (31) aufweist, die sich gegenüber liegen,
- **dass** der erste Umfangsabschnitt (30) Leitschaufeln (11) aufweist, die vom ersten Umfangsabschnitt (30) in Richtung zum zweiten Umfangsabschnitt (31) abstehen
- **dass** der zweite Umfangsabschnitt (31) Leitschaufeln (11) aufweist, die vom zweiten Umfangsabschnitt (31) in Richtung zum ersten Umfangsabschnitt (30) abstehen
- **dass** die Leitschaufeln (11) des ersten Umfangsabschnitts (30) in der Strömungsrichtung (35) des Abgasstroms versetzt zu den Leitschaufeln (11) des zweiten Umfangsabschnitts (31) angeordnet sind.

## Claims

1. An exhaust gas treatment device for an exhaust system of an internal combustion engine,
- with a housing (2), through which an exhaust gas path (3) leads,
- with an injector (4) arranged on the housing (2) for introducing a reduction agent into an exhaust gas flow following the exhaust gas path (3),
- with a mixer (7) arranged in the housing (2) for mixing-through the reactant with the exhaust gas flow,
- wherein the mixer (7) comprises a shell (8), which encloses a mixer cross section (10) through which the exhaust gas flow can flow,
- wherein the mixer (7) comprises multiple guide blades (11), which on a shell inside (13) project from the shell (8) and project into the mixer cross section (10),
- wherein the mixer (7) is a shaped sheet metal part (19), in which the shell (8), the guide blades (11) and the straps (13) are formed by a single sheet metal piece (20),
**characterized in**
- **that** the mixer (7) comprises multiple straps (13), which on a shell outside (14) project from the shell (8) and in each case project into a strap opening (16) formed on the housing (2) and penetrating a housing wall (15),
- **that** the straps (13) are also formed by the sheet metal piece (20),
- **that** the mixer (7) on its shell outside (14) is radially supported via supporting zones (22) on a wall inside (23) of the housing wall (15),
- **that** the supporting zones (22) are arranged distributed in the circumferential direction (9) of the shell (8) and spaced from one another,
- **that** radially between the shell outside (14) and the wall inside (23) an air gap (24) is formed outside the straps (13) and outside the supporting zones (22).

2. The device according to claim 1,
**characterized in**
**that** the straps (13) are each fastened to the housing (2) from the outside by means of a welded connection (17), wherein the respective welded connection (17) closes off the associated strap opening (16).

3. The device according to claim 1 or 2,
**characterized in**
**that** the supporting zones (22) are formed by elevations (25), which through forming are integrally shaped only on the housing wall (15) or only on the shell (8) or both on the housing wall (15) and also on the shell (8).

4. The device according to any one of claims 1 to 3,
**characterized in**
**that** the supporting zones (22) are each formed in the region of the straps (13).

5. The device according to any one of the claims 1 to 4,
**characterized in**
**that** the housing (2) is configured in a two-shelled manner at least in a housing section (26) containing the mixer (7) such that the shell outside (14) extends along a first housing shell (27) in a first circumferential section (30) and extends along a second circumferential section (31) along a second housing shell (28).

6. The device according to claim 6,
**characterized in**
**that** in the region of the first housing shell (27) and in the region of the second housing shell (28) such a supporting zone (22) each is formed.

7. The device according to claim 5 or 6,
**characterized in**
**that** on the first housing shell (27) and on the second housing shell (28) at least one such strap opening (16) each is formed.

8. The device according to any one of the claims 1 to 7,
**characterized in**
**that** the shell cross section (10) is flat so that a width (32) is greater than a height (33).

9. The device according to any one of the claims 1 to 8,
**characterized in**
**that** the guide blades (11) are straight and run parallel to one another.

10. The device according to any one of the claims 1 to 9,
**characterized in**
**that** the guide blades (11) in each case at one end are connected to the shell (8) in a fixed manner and in each case are arranged on the other end in a freestanding manner.

11. The device according to any one of the claims 1 to 10,
**characterized in**
- **that** the shell (8) on an inflow-sided mixer side (36) and/or on an outflow-sided mixer side (37) comprises a first circumferential section (30) and a second circumferential section (31) which are located opposite one another,
- **that** the first circumferential section (30) comprises guide blades (11), which project from the first circumferential section (30) in the direction of the second circumferential section (31)
- **that** the second circumferential section (31) comprises guide blades (11), which project from the second circumferential section (31) in the direction of the first circumferential section (30)
- **that** the guide blades (11) of the first circumferential section (30) are arranged in the flow direction (35) of the exhaust gas flow offset from the guide blades (11) of the second circumferential section (31).

## Revendications

1. Dispositif de traitement de gaz d'échappement pour un système de gaz d'échappement d'un moteur à combustion interne,
- avec un carter (2), à travers lequel passe un chemin de gaz d'échappement (3),
- avec un injecteur (4) agencé au niveau du carter (2) afin d'amener un agent de réduction dans un flux de gaz d'échappement qui suit le chemin de gaz d'échappement (3),
- avec un mélangeur (7) agencé dans le carter (2) afin de mélanger l'agent de réaction au flux de gaz d'échappement,
- dans lequel le mélangeur (7) comporte une enveloppe (8) qui entoure une section transversale de mélangeur (10) pouvant être parcourue par le flux de gaz d'échappement,
- dans lequel le mélangeur (7) comporte plusieurs pales directrices (11) qui s'écartent de l'enveloppe (8) au niveau d'un côté intérieur d'enveloppe (13) et qui pénètrent dans la section transversale de mélangeur (10),
- dans lequel le mélangeur (7) est une pièce moulée en tôle (19) telle que l'enveloppe (8) et les pales directrices (11) sont formées par une seule pièce de tôle (20),
**caractérisé en ce que**
- le mélangeur (7) comporte plusieurs languettes (13) qui s'écartent de l'enveloppe (8) au niveau d'un côté extérieur d'enveloppe (14) et qui pénètrent à chaque fois dans une ouverture de languette (16) réalisée au niveau du carter (2) et traversant une paroi de carter (15),
- les languettes (13) sont également formées par la pièce en tôle (20),
- le mélangeur (7) est appuyé de façon radiale au niveau de son côté extérieur d'enveloppe (14), par l'intermédiaire de zones d'appui (22), à un côté intérieur de paroi (23) de la paroi de carter (15),
- les zones d'appui (22) sont agencées de manière à être réparties dans la direction circonférentielle (9) de l'enveloppe (8) et à une certaine distance les unes des autres,
- une fente d'air (24) est réalisée de façon radiale entre le côté extérieur d'enveloppe (14) et le côté intérieur de paroi (23) en dehors des languettes (13) et en dehors des zones d'appui (22).

2. Dispositif selon la revendication 1, **caractérisé en ce que** les languettes (13) sont fixées de l'extérieur au carter (2), à chaque fois au moyen d'un assemblage soudé (17), l'assemblage soudé respectif (17) fermant l'ouverture de languette (16) associée.

3. Dispositif selon la revendication 1 ou 2, **caractérisé en ce que** les zones d'appui (22) sont formées par des bosses (25) qui sont formées par déformation intégralement seulement au niveau de la paroi de carter (15) ou seulement au niveau de l'enveloppe (8) ou aussi bien au niveau de la paroi de carter (15) qu'au niveau de l'enveloppe (8).

4. Dispositif selon l'une des revendications 1 à 3, **caractérisé en ce que** les zones d'appui (22) sont réalisées à chaque fois dans la zone des languettes (13).

5. Dispositif selon l'une des revendications 1 à 4, **caractérisé en ce que** le carter (2) est conçu avec deux coques au moins dans une partie de carter (26) qui contient le mélangeur (7) de telle sorte que le côté extérieur d'enveloppe (14) s'étend dans un premier tronçon périphérique (30) le long d'une première coque de carter (27) et le long d'un deuxième tronçon périphérique (31) le long d'une deuxième coque de carter (28).

6. Dispositif selon la revendication 5, **caractérisé en ce que**, dans la zone de la première coque de carter (27) et dans la zone de la deuxième coque de carter (28), il est prévu à chaque fois une zone d'appui (22) de ce type.

7. Dispositif selon la revendication 5 ou 6, **caractérisé en ce que**, au niveau de la première coque de carter (27) et au niveau de la deuxième coque de carter (28), il est prévu à chaque fois au moins une ouverture de languette (16) de ce type.

8. Dispositif selon l'une des revendications 1 à 7, **caractérisé en ce que** la section transversale d'enveloppe (10) est plate de telle sorte qu'une largeur (32) est plus grande qu'une hauteur (33).

9. Dispositif selon l'une des revendications 1 à 8, **caractérisé en ce que** les pales directrices (11) sont rectilignes et s'étendent parallèlement les unes aux autres.

10. Dispositif selon l'une des revendications 1 à 9, **caractérisé en ce que** les pales directrices (11) sont assemblées à chaque fois par une extrémité de manière fixe à l'enveloppe (8) et sont agencées à chaque fois par l'autre extrémité de manière libre.

11. Dispositif selon l'une des revendications 1 à 10, **caractérisé en ce que**
- l'enveloppe (8) comporte au niveau d'un côté de mélangeur (36) côté entrée et/ou au niveau d'un côté de mélangeur (37) côté sortie un premier tronçon périphérique (30) et un deuxième tronçon périphérique (31) qui se font face,
- le premier tronçon périphérique (30) comporte des pales directrices (11) qui s'écartent du premier tronçon périphérique (30) en direction du deuxième tronçon périphérique (31),
- le deuxième tronçon périphérique (31) comporte des pales directrices (11) qui s'écartent du deuxième tronçon périphérique (31) en direction du premier tronçon périphérique (30),
- les pales directrices (11) du premier tronçon périphérique (30) sont agencées dans le sens d'écoulement (35) du flux de gaz d'échappement de manière décalée par rapport aux pales directrices (11) du deuxième tronçon périphérique (31).
